# EUROPÄISCHE PATENTSCHRIFT

(11) **EP 1 611 660 B1**
(45) Veröffentlichungstag und Bekanntmachung des Hinweises auf die Patenterteilung: **15.05.2013**
(21) Anmeldenummer: 04724253.2
(22) Anmeldetag: 30.03.2004
(51) Int. Cl.: H02K 11/00

(54) **ELEKTROMOTOR UND/ODER GETRIEBE**
ELECTRIC MOTOR AND/ OR TRANSMISSION
MOTEUR ELECTRIQUE ET/OU TRANSMISSION

(30) Priorität: 04.04.2003 DE 10315630
(43) Veröffentlichungstag der Anmeldung: 04.01.2006
(73) Patentinhaber: Wittenstein AG, 97999 Igersheim (DE)
(72) Erfinder: MICHEL, Frank, 212 Bartlett EL 60100 (US)
(74) Vertreter: Weiss, Peter
(86) Internationale Anmeldenummer: PCT/EP2004/003343
(87) Internationale Veröffentlichungsnummer: WO 2004/088823

(56) Entgegenhaltungen:
- EP-A- 0 656 500
- US-A- 4 384 493
- US-A- 5 763 969
- US-A- 5 841 255
- US-A- 6 066 907
- US-A1- 2003 048 085
- PATENT ABSTRACTS OF JAPAN Bd. 2003, Nr. 07, 3. Juli 2003 (2003-07-03) -& JP 2003 083824 A (KAWATETSU ADVANTECH CO LTD), 19. März 2003 (2003-03-19)
- PATENT ABSTRACTS OF JAPAN Bd. 2002, Nr. 10, 10. Oktober 2002 (2002-10-10) -& JP 2002 176744 A (CANON INC; CANON PRECISION INC), 21. Juni 2002 (2002-06-21)

## Beschreibung

Die vorliegende Erfindung betrifft einen Elektromotor und/oder ein Getriebe nach dem Oberbegriff des Anspruchs 1.

Derartige Getriebe sind in vielfältigster Form und Ausführung auf dem Markt bekannt und erhältlich. Sie dienen im wesentlicher der Über- oder Untersetzung einer Antriebsbewegung eines Motors, Elektromotors oder eines anderen Antriebes. Nachteilig ist bei den herkömmlichen bekannten Elektromotoren und/oder Getrieben, dass eine Lebensdauer sowie eine erforderliche Wartung oder Wartungsintervalle nur schwer bestimmbar sind. Zudem ist eine Lebensdauer bspw. bei Überlast stark reduziert, was ebenfalls unerwünscht ist.

Da eine Bestimmbarkeit der Lebensdauer sowie der Einsetzbarkeit und Belastbarkeit des Elektromotors und/oder Getriebes oftmals nicht bekannt ist, lässt sich auch keinen Einfluss nehmen auf eine Ersatzteil-Lagerhaltung, so dass viele Ersatzteile vorrätig gehalten werden müssen, was wiederum unerwünschte Vorrats-Lagerhaltekosten verursacht.

Der vorliegenden Erfindung liegt die Aufgabe zugrunde, die vorgenannten Nachteile zu beseitigen, und ein Elektromotor und/oder Getriebe zu schaffen, mit welchem eine Funktionsüberwachung, . was bspw. Kräfte, Momente, Temperatur, Dichtheit, Wartungsintervalle etc. bei bestimmten Belastungen bzw. Einsätzen ermöglicht. Zudem soll eine schnellere und zuverlässigere Montage und Wartung bei höherer Verfügbarkeit und Produktivität und längerer Einsetzbarkeit möglich sein. Ferner soll eine Reduzierung der Ersatzteil-Lagerhaltung möglich sein. Ferner soll ein Nachweis von Benutzungsfehlern ebenfalls möglich sein.

Die US 5,763,969 offenbart ein Anzeigendisplay eines Elektromotors zum Antreiben eines Flügelrades zur Belüftung, wobei das Anzeigendisplay eine Drehzahlanzeige aufweist, um die einzelnen Drehzahlen pro Minute anzuzeigen.

Die US 6,066,907 beschreibt einen Elektromotor mit einer Antriebswelle und einem Gehäuse, an welchem ein Zentrierflansch vorgesehen ist.

Die US 4,384,493 offenbart einen Elektromotor, welcher einen Zentrierflansch aufweist, wobei ein Gehäuse des Elektromotors rotativ gegenüber dem Zentrierflansch über mehrere Lagerelemente entkoppelt ist. Zwischen dem Gehäuse und dem Zentrierflansch ist eine Kraftmesszelle angeordnet. Diese greift mit einem Bolzen in einen Befestigungsflansch ein, der nicht direkt mit dem Gehäuse verbunden ist. Auf dem Bolzen setzt ein Dehnungsmessstreifen auf.

Der Vollständigkeit halber wird auf die JP-A-2003 083824 hingewiesen, welche einen montierbaren Drehmomentmesser für eine rotierenden Antrieb zeigt.

Zur Lösung dieser Aufgabe führen die Merkmale des kennzeichnenden Teils des Patentanspruches 1.

Bei der vorliegenden Erfindung ist vorgesehen, dass das Gehäuse des Elektromotors und/oder Getriebes mit einem Befestigungsflansch versehen ist, welcher zum eigentlichen Gehäuse über einen ringartigen Einstich beabstandet ist und auf diese Weise eine kreisringartig ausgebildete Engstelle aufweist. Im Bereich dieser Engstelle ist der zumindest eine Dehnungssensor angeordnet bzw. zugeordnet.

Dabei soll daran gedacht sein, dass bspw. bei Überschreiten eines zulässigen Drehmomentes, ein Alarmsignal geschaltet oder an einer integrierten Anzeigeelektronik angezeigt wird. Ggf. kann auch die vollständige Anlage oder der Fertigungsprozess, in welchem bspw. ein derartiges Getriebe eingesetzt ist, abgeschaltet werden.

Wichtig ist jedoch bei der vorliegenden Erfindung, dass insbesondere über zumindest einen Dehnungssensor oder auch eine Vielzahl von weiteren dem Elektromotor und/oder Getriebe zugeordneten Sensoren, wie bspw. Temperatursensoren, weitere Kraftsensoren, Drehzahlsensoren od. dgl. in der Anzeigeelektronik oder in einer externen Auswerteeinheit die Getriebedaten abgelegt und/oder angezeigt werden können. Dabei werden diese Werte mit entsprechenden, hinterlegten Grenzwerten verglichen, wobei ein Belastungszustand sowie ein kritischer oder unzulässiger Belastungszustand des Getriebes und/oder Elektromotors angezeigt wird oder anzeigbar ist.

Auf diese Weise lässt sich der Einsatz des Elektromotors und/oder Getriebes im Betrieb überprüfen, so dass leistungsoptimiert der Elektromotor und/oder das Getriebe eingesetzt werden kann und gleichzeitig eine Aussage über Wartungsintervalle, Standzeit etc. exakt möglich ist.

Auf diese Weise wird der Elektromotor und/oder das Getriebe lediglich in seinem zulässigen Grenz- und Belastungsbereich eingesetzt, was die Lebenszeit erheblich erhöht.

Ferner hat sich als vorteilhaft erwiesen, dass ebenfalls zur Erhöhung der Standzeit führt, wenn dem Zentrierflansch des Elektromotors und/oder Getriebes zumindest ein Dämpfungselement radial umlaufend in eine Mantelfläche eingesetzt ist, um eine dämpfende und schwingende radiale Lagerung und Zentrierung zu gewährleisten. Dabei kann das Dämpfungselement bspw. als radial umlaufender O-Ring, der eine Mantelfläche nach aussen überragt, ausgebildet sein. Dies soll ebenfalls im Rahmen der vorliegenden Erfindung liegen. Hierdurch werden auch Kraftnebenschlüsse vermieden und tragen ebenfalls zur längeren Standzeit des Getriebes und/oder Elektromotors bei.

Auf diese Weise lassen sich die anliegenden Kräfte, Drehmomente etc. wesentlich genauer bestimmen und ermitteln.

Im Rahmen der Erfindung soll liegen, dass der Befestigungsflansch hülsenartig das Gehäuse koaxial vollständig oder auch nur zumindest teilweise umfängt, wobei die Dehnungssensoren radial im Bereich der Engstelle bzw. der Engstellen zueinander beabstandet sind.

Weitere Vorteile, Merkmale und Einzelheiten der Erfindung ergeben sich aus der nachfolgenden Beschreibung bevorzugter Ausführungsbeispiele sowie anhand der Zeichnung, diese zeigt in
Figur 1 eine schematisch dargestellte Draufsicht auf ein Getriebe mit Dehnungssensor, Anzeigeelektronik und Dämpfungselement;
Figur 2 eine schematisch dargestellte Seitenansicht des Getriebes gemäss Figur 1;
Figur 3 eine weitere Ansicht des Getriebes gemäss Figur 1;
Figur 4 einen schematisch dargestellten Längsschnitt durch ein Gehäuse eines Elektromotors und/oder Getriebes R.

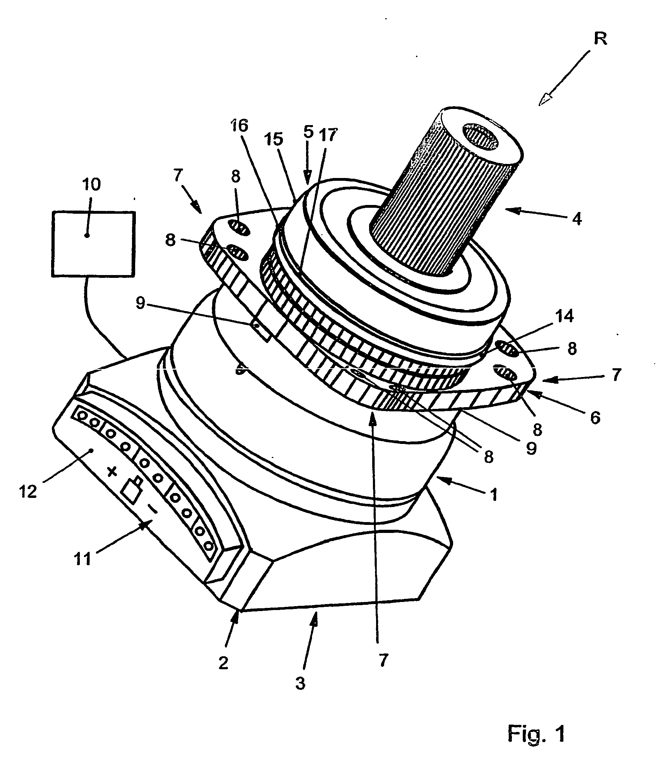

Gemäss Figur 1 weist ein Getriebe R ein Gehäuse 1 auf, in welchem im Bereich eines Sockelflansches 2, hier nicht näher dargestellt, lediglich angedeutet, eine Antriebswelle 3 vorgesehen ist, die durch hier nicht dargestellte Getriebeelemente, Planetenräder, Planetenradträger, Planetenumlaufträger etc. eine Drehbewegung übersetzt oder untersetzt auf eine Abtriebswelle 4.

Im Bereich der Abtriebswelle 4 weist das Getriebe R einen Zentrierflansch 5 auf. Dieser ist leicht ballig und nach aussen verjüngt ausgebildet. Im Anschluss an den Zentrierflansch 5, schliesst ein Befestigungsflansch 6 an, der insbesondere in seinen Eckbereichen 7 Befestigungsschraubenlöcher 8 aufweist.

Vorzugsweise sind in jedem Eckbereich 7 des Befestigungsflansches 6 zwei zueinander beabstandete Befestigungsschraubenlöcher 8 gebildet. Als Befestigungsflansch 6 können insbesondere zwei, drei und vorzugsweise vier Eckbereiche 7 mit jeweils Anordnungen von Befestigungsschraubenlöchern 8 vorgesehen sein.

Bei der vorliegenden Erfindung ist von Bedeutung, dass dem Gehäuse 1, vorzugsweise unterhalb des Befestigungsflansches 6 zumindest ein Dehnungssensor 9 im zylindrischen Teil des Gehäuses 1 zugeordnet ist. Der Dehnungssensor 9, der Kräfte und Drehmomente misst, ist vorzugsweise ein Dehnungsmesstreifen.

Wichtig ist bei der vorliegenden Erfindung die Lage des Dehnungssensors 9 nahe des Befestigungsflansches 6 am Gehäuse 1. Im Rahmen der vorliegenden Erfindung soll jedoch auch liegen den Dehnungssensor 9 direkt dem Befestigungsflansch 6 zuzuordnen.

Es hat sich jedoch als besonders vorteilhaft erwiesen, den Dehnungssensor 9 jeweils zwischen eine Anordnung von Befestigungsschraubenlöcher 8 bzw. zwei nebeneinanderliegenden Eckbereichen 7 am Gehäuse 1, nahe des Befestigungsflansches 6 anzuordnen.

Hierdurch lassen sich Drehmomente, Kraftverläufe, insbesondere Kräfte, die über das Gehäuse in den Befestigungsflansch 6 eingeleitet werden, bestimmen, die auf Betriebszustände des Getriebes R schliessen lassen. Die Dehnungssensoren 9 können mit einer externen Auswerteeinheit 10, wie sie hier lediglich angedeutet ist oder mit einer Anzeigeelektronik 11 in Verbindung stehen, in welchen die entsprechenden Signale ausgewertet und abgelegt werden. Ggf. können in der Auswerteeinheit 10 und/oder in der Anzeigeelektronik 11 die gemessenen Werte auch über die Zeit abgespeichert werden, um entsprechende Aussagen über Standzeit, Belastungszustände etc. zu erhalten.

Vorzugsweise ist die Anzeigeelektronik 11, wie es in den Figuren 1 bis 3 dargestellt ist, dem Sockelflansch 2 des Gehäuses 1 aufgesetzt und kann auch als Anzeigedisplay 12 ausgebildet sein.

Das Anzeigedisplay 12 zeigt optisch an, wenn das Getriebe R durch zu hohe Kräfte beaufschlagt ist. Dann kann entsprechend optisch ein Alarm signalisiert werden oder ein akustischer Alarm oder sonstiger Alarm in einer zentralen Überwachungseinrichtung generiert werden. Ferner lassen sich auch andere Werte, wie Temperatur, erforderliche Wartungsintervalle oder Wartungszeiten sowie Standzeiten des Getriebes am Anzeigedisplay 12 ablesen und auswerten. Das Anzeigedisplay 12 kann manuell auf die jeweiligen anzuzeigenden Parameter umgeschaltet werden, sollte dies erwünscht sein.

Von Vorteil ist bei der vorliegenden Erfindung, dass durch die Bestimmung getriebespezifischer oder elektromotorspezifischer Parameter, wie Kräfte, Drehmomente, Temperatur ggf. auch Ölstand des Schmiermittels ein optimaler Betriebszustand gewährleistet bleibt. Auch kann eine Wartung planmässig oder rechtzeitig erfolgen, bspw. bei Schmiermittelverlust. Hierdurch werden alle Bauteile des Getriebes lediglich im zulässigen Bereich belastet und führen zur Erhöhung der Lebensdauer. Auf diese Weise kann eine Lebensdauer wesentlich exakter bestimmt werden, was insbesondere für eine Ersatzteil-Lagerhaltung von Vorteil ist. Hierdurch lässt sich ein Ersatzteil-Lager bspw. bei einer Vielzahl von im Einsatz befindlichen Getrieben exakt optimieren und bestimmen. Auf diese Weise können geringe Stückzahlen von Ersatzteilen eingelagert werden und entsprechend bei Bedarf, hinsichtlich auch der Prognosen der Laufzeiten des Getriebes nach- oder vorgefertigt werden.

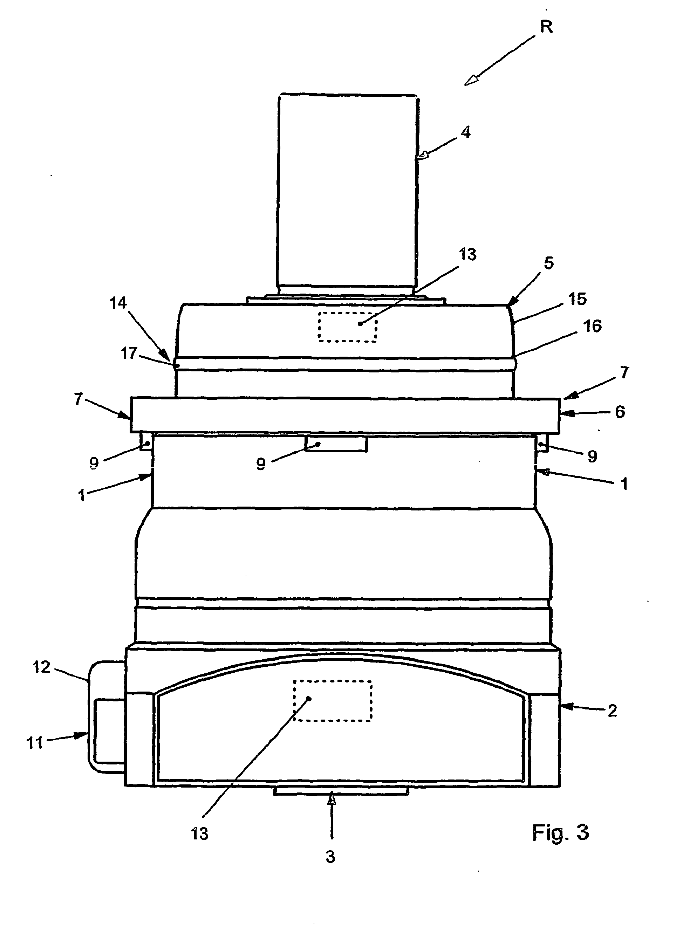

Um bspw. die Temperatur des Getriebes, die Temperatur des Schmiermittels, Anzahl der Umdrehungen, eine Leckage, ein Füllstand od. dgl. überwachen zu können, sind innerhalb des Getriebes R, insbesondere im Gehäuse 1 entsprechende in Figur 3 gestrichelt angedeutete, weitere Sensoren 13 vorgesehen, welche diese Parameter bestimmen. Diese sind ebenfalls mit der Anzeigeelektronik 11 bzw. dem Anzeigedisplay 12 verbunden und können optisch abgelesen und angezeigt werden. Auch ist denkbar, dass über die Zeit diese Werte hinterlegt und abgespeichert werden, so dass über die Zeit auch ein Nachweis des Betriebszustandes möglich ist. Dies hilft insbesondere, um bspw. bei Fehlbenutzung einen entsprechenden Nachweis zu liefern.

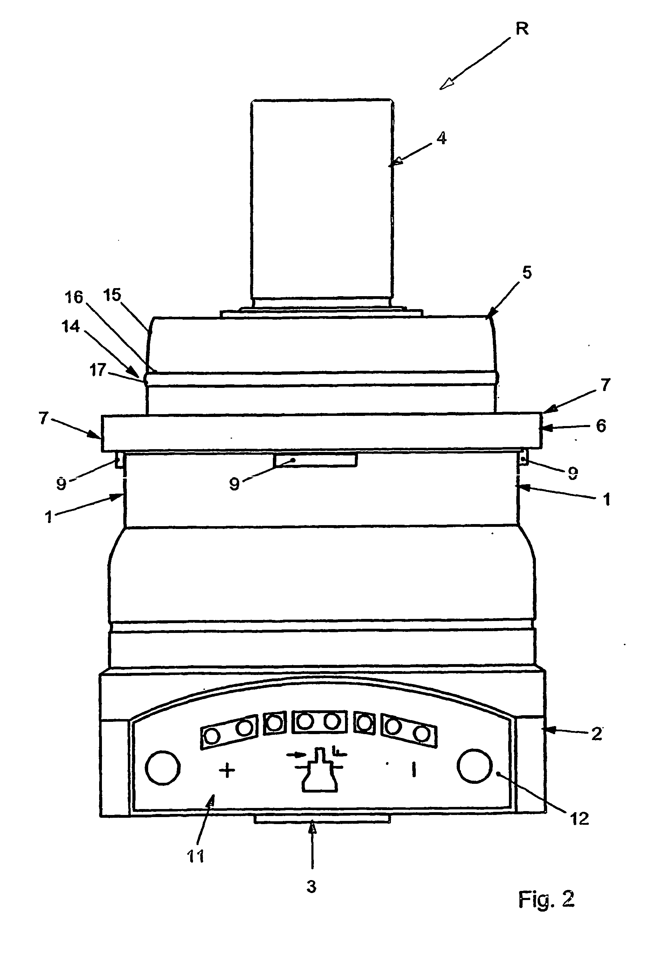

Ferner hat sich als vorteilhaft bei der vorliegenden Erfindung erwiesen, wie es insbesondere in den Figuren 2 und 3 deutlich aufgezeigt ist, dass im Bereich des Zentrierflansches 5, zwischen Festigungsflansch 6 und Abtriebswelle 4, der vorzugsweise nach aussen gerichtet verjüngt und leicht ballig ausgebildet ist, zumindest ein radial umlaufendes Dämpfungselement 14 in einer zumindest teilweise umlaufenden Nut 16 vorgesehen ist. Wichtig ist bei der vorliegenden Erfindung auch, dass das Dämpfungselement 14, welches radial umlaufend in eine Mantelfläche des Zentrierflansches 5 eingesetzt ist, als elastisch verformbares Element ausgebildet ist. Vorzugsweise ist das Dämpfungselement 14 als Gummielement ausgebildet und übergreift die Oberfläche des Zentrierflansches 5.

Bevorzugt wird als Dämpfungselement 14 in die umlaufende Nut 16 ein O-Ring 17 eingesetzt.

Wird das Getriebe R in einen entsprechenden, passenden Aufnahmeflansch mit dem Zentrierflansch 5 eingesteckt, so wird das Getriebe R mittels des Dämpfungselementes 14 in einem hier nicht dargestellten Aufnahmeflansch schwimmend und exakt mittig gelagert. Wichtig ist eine schwimmende Lagerung, so dass keine Kraftnebenschlüsse entstehen können. Dabei soll ebenfalls im Rahmen der vorliegenden Erfindung liegen, bspw. mehrere parallel zueinander angeordnete radial umlaufende Nuten 16 aussen im Zentrierflansch 5 vorzusehen, um mehrere Dämpfungselemente 14 bzw. O-Ringe 17 radial auf den Zentrierflansch 5 vorzusehen.

Im Vergleich zu herkömmlichen Zentrierflanschen ist bei der vorliegenden Erfindung der Zentrierflansch 5 zu einem nicht dargestellten Aufnahmeflansch mit Spiel behaftet, so dass die den Zentrierflansch 5 nach aussen überragenden Dämpfungselemente 14 eine schwimmende Lagerung bilden.

Im Rahmen der vorliegenden Erfindung soll insbesondere liegen, dass das Getriebe als Elektromotor oder als Einheit, bestehend aus Elektromotor und Getriebe, ausgebildet sein kann.

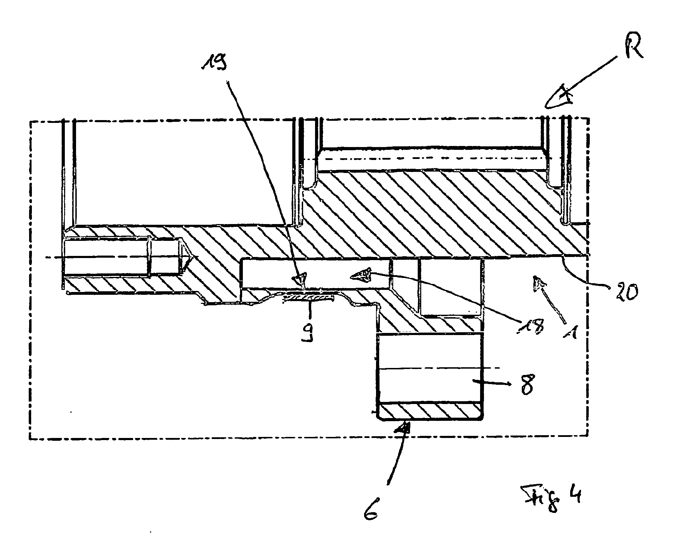

In einem bevorzugten Ausführungsbeispiel der vorliegenden Erfindung gemäss Figur 4 ist ein Gehäuse 1 eines Elektromotors und/oder Getriebes R aufgezeigt, wobei lediglich ein querschnittlicher Bereich des Gehäuses 1 aufgezeigt ist. Dort schliesst aussen ein Befestigungsflansch 6 an, welcher über einen Einstich 18 zu einer Mantelfläche 20 des Gehäuses 1 beabstandet ist.

Im Bereich des Einstiches 18 ist im Befestigungsflansch 6 eine Engstelle 19 gebildet, die der Aufnahme zumindest eines Dehnungssensors 9 dient.

Vorzugsweise sind mehrere radial um die umlaufende Engstelle 19 bzw. um den Befestigungsflansch 6 beabstandet angeordnete Dehnungssensoren 9 angeordnet bzw. vorgesehen.

Der Befestigungsflansch 6 weist ferner eine Mehrzahl von Befestigungsschraubenlöchern 8 auf, wie sie auch in beispielsweise Figur 1 angedeutet sind. Bevorzugt ist jedoch, dass der Befestigungsflansch 6 ringartig das Gehäuse 1 bzw. die Mantelfläche 20 zumindest teilweise oder vollständig koaxial umfängt und der Einstich 18 ebenfalls hülsenartig zwischen der Mantelfläche 20 des Gehäuses 1 aus dem Befestigungsflansch 6 selbst gebildet ist.

Insbesondere durch die radial umlaufende Engstelle 19 kann in diesem Bereich über den Dehnungssensor 9 eine exakte sensible Bestimmung der resultierenden Kräfte, Drehmomente etc. ermittelt werden. Dies hat sich bei der vorliegenden Erfindung als vorteilhaft erwiesen.

### Positionszahlenliste

| | | | | | |
|---|---|---|---|---|---|
| 1 | Gehäuse | 34 | | 67 | |
| 2 | Sockelflansch | 35 | | 68 | |
| 3 | Antriebswelle | 36 | | 69 | |
| 4 | Abtriebswelle | 37 | | 70 | |
| 5 | Zentrierflansch | 38 | | 71 | |
| 6 | Befestigungsflansch | 39 | | 72 | |
| 7 | Eckbereich | 40 | | 73 | |
| 8 | Befestigungsschraubenlöcher | 41 | | 74 | |
| 9 | Dehnungssensor | 42 | | 75 | |
| 10 | Auswerteinheit | 43 | | 76 | |
| 11 | Anzeigeelektronik | 44 | | 77 | |
| 12 | Anzeigedisplay | 45 | | 78 | |
| 13 | Sensor | 46 | | 79 | |
| 14 | Dämpfungselement | 47 | | | |
| 15 | Mantelfläche | 48 | | | |
| 16 | Nut | 49 | | R | Getriebe u/o Elektromotor |
| 17 | O-Ring | 50 | | | |
| 18 | Einstich | 51 | | | |
| 19 | Engstelle | 52 | | | |
| 20 | Mantelfläche | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Elektromotor und/oder Getriebe mit einem Gehäuse (1) an welchem ein Befestigungsflansch (6) vorgesehen ist, wobei dem Gehäuse (1) zumindest ein Dehnungssensor (9) zugeordnet ist,
**dadurch gekennzeichnet,**
**dass** der Befestigungsflansch (6) über einen axialen Einstich (18) zu einer Mantelfläche (20) des Gehäuses (1) radial zumindest teilweise oder vollständig beabstandet ist, wobei der Befestigungsflansch (6) im Bereich des Einstiches (18) zumindest eine Engstelle (19), insbesondere eine zumindest teilweise oder vollständig radial umlaufende Engstelle (19) zur Aufnahme zumindest eines Dehnungssensors (9) aufweist.

2. Elektromotor und/oder Getriebe nach Anspruch 1, **dadurch gekennzeichnet, dass** in dem Gehäuse (1) ein Zentrierflansch (5) vorgesehen ist und dem Gehäuse (1) zumindest eine Anzeigeelektronik (11), insbesondere ein Anzeigedisplay (12) zugeordnet ist.

3. Elektromotor und/oder Getriebe nach Anspruch 1 oder 2 **dadurch gekennzeichnet, dass** der Zentrierflansch (5) zumindest eine radial umlaufende Nut (16) aufweist, in welcher zumindest ein Dämpfungselement (14) eingesetzt ist.

4. Elektromotor und/oder Getriebe nach einem der vorigen Ansprüche, **dadurch gekennzeichnet, dass** der zumindest eine Dehnungssensor (9) im zylindrischen Bereich des Befestigungsflansches (6) angeordnet ist.

5. Elektromotor und/oder Getriebe nach Anspruch 4, **dadurch gekennzeichnet, dass** der zumindest eine Dehnungssensor (9) nahe der Befestigungsschraubenlöcher (8) des Befestigungsflansches (6) angeordnet ist.

6. Elektromotor und/oder Getriebe nach einem der vorigen Ansprüche, **dadurch gekennzeichnet, dass** mehrere Dehnungssensoren (9) radial verteilt um das Gehäuse (1), insbesondere um den Befestigungsflansch (6) im Bereich des zylindrischen Gehäuses (1), dem Zentrierflansch (5) gegenüberliegend, angeordnet sind.

7. Elektromotor und/oder Getriebe nach einem der vorigen Ansprüche, **dadurch gekennzeichnet, dass** der zumindest eine Dehnungssensor (9) in etwa mittig zwischen zwei benachbarten Eckbereichen (7) zweier nebeneinanderliegender Anordnungen von Befestigungsschraubenlöchern (8) unterhalb des Zentrierflansches (5) am zylindrischen Gehäuse (1) nahe diesem angeordnet ist.

8. Elektromotor und/oder Getriebe nach einem der vorigen Ansprüche, **dadurch gekennzeichnet, dass** der Befestigungsflansch (6) zumindest teilweise umlaufend aus dem Gehäuse (1) selbst gebildet ist oder diesem zugeordnet ist, wobei zwischen der Mantelfläche (20) und dem Befestigungsflansch (6) zumindest ein Einstich (18) oder Spalt zur Bildung zumindest einer Engstelle (19) vorgesehen ist.

9. Elektromotor und/oder Getriebe nach einem der vorigen Ansprüche 2 bis 8, **dadurch gekennzeichnet, dass** der zumindest eine Dehnungssensor (9) als Dehnungsmessstreifen ausgebildet ist und mit der Auswerteeinheit (10) und/oder der Anzeigeelektronik (11) in Verbindung steht.

10. Elektromotor und/oder Getriebe nach einem der vorigen Ansprüche 2 bis 9, **dadurch gekennzeichnet, dass** mit dem zumindest einen Dehnungssensor (9) eine Kraft und/oder ein Drehmoment, insbesondere radiale Kräfte ermittelbar sind und bei Überschreiten eines wählbaren, vorgegebenen Grenzwertes ein Alarmsignal oder ein Abschaltsignal generierbar und in der Anzeigeelektronik (11) darstellbar ist.

11. Elektromotor und/oder Getriebe nach Anspruch 10, **dadurch gekennzeichnet, dass** die in dem zumindest einen Dehnungssensor (9) ermittelten Signale zur Bestimmung des Zustandes, insbesondere des Betriebszustandes des Getriebes über die Zeit aufgezeichnet, in der Auswerteeinheit (10) abgespeichert und ggf. in der Anzeigeelektronik (11) hinterlegt, anzeigbar oder abrufbar sind.

12. Elektromotor und/oder Getriebe nach einem der vorigen Ansprüche 2 bis 11, **dadurch gekennzeichnet, dass** die Anzeigeelektronik (11) mit zumindest einem Sensor (13), Dehnungssensor (9), Kraftsensor, Temperatursensor, Inkrementalsensor, od. dgl., die dem Getriebe oder den Getriebeelementen zugeordnet sind, in Verbindung steht.

13. Elektromotor und/oder Getriebe nach einem der vorigen Ansprüche 2 bis 12, **dadurch gekennzeichnet, dass** die zumindest eine Anzeigeelektronik (11) einem Sockelflansch (2) des Gehäuses (1) zugeordnet ist.

14. Elektromotor und/oder Getriebe nach einem der vorigen Ansprüche 2 bis 13, **dadurch gekennzeichnet, dass** in der Anzeigeelektronik (11), insbesondere am Anzeigedisplay (12) getriebespezifische auch zulässige Zustandsparameter und Grenzwerte, wie Kraft, Temperatur, Lebensdauer, Anzahl der Umdrehungen optisch anzeigbar und ablesbar sind.

15. Elektromotor und/oder Getriebe nach einem der vorigen Ansprüche 2 bis 14, **dadurch gekennzeichnet, dass** die in der Anzeigeelektronik (11), insbesondere im Anzeigedisplay (12) generierten Zustandsdaten, ggf. drahtlos an eine externe Auswerteeinrichtung (10) zusätzlich übermittelbar sind.

16. Elektromotor und/oder Getriebe nach einem der vorigen Ansprüche 2 bis 15, **dadurch gekennzeichnet, dass** die getriebespezifischen Zustandsdaten, wie Kraft, Temperatur, Laufzeit, Anzahl der Umdrehungen etc. über das manuell bedienbare Anzeigendisplay (12) aufrufbar und ablesbar sind.

17. Elektromotor und/oder Getriebe nach einem der vorigen Ansprüche 3 bis 16, **dadurch gekennzeichnet, dass** das Dämpfungselement (14), welches in die radial umlaufende Nut eingesetzt ist, als elastisch verformbares Gummielement ausgebildet ist.

## Claims

1. An electric motor and/or transmission, having a housing (1) on which a securing flange (6) is provided, wherein at least one strain sensor (9) is associated with the housing (1), **characterised in that** the securing flange (6) is radially at least partially or completely distanced from an outer surface (20) of the housing (1) via an axial recess (18), wherein in the region of the recess (18), the securing flange (6) has at least one constriction (19), in particular an at least partially or completely radially encircling constriction (19), to receive at least one strain sensor (9).

2. An electric motor and/or transmission according to claim 1, **characterised in that** a centring flange (5) is provided to the housing (1) and at least one display electronics (11), in particular a read out display (12), is associated with the housing (1).

3. An electric motor and/or transmission according to claim 1 or 2, **characterised in that** the centring flange (5) has at least one radially encircling groove (16) in which at least one damping element (14) is inserted.

4. An electric motor and/or transmission according to any one of the preceding claims, **characterised in that** the at least one strain sensor (9) is arranged in the cylindrical region of the securing flange (6).

5. An electric motor and/or transmission according to claim 4, **characterised in that** the at least one strain sensor (9) is arranged close to the securing screw holes (8) of the securing flange (6).

6. An electric motor and/or transmission according to any one of the preceding claims, **characterised in that** a plurality of strain sensors (9) are arranged distributed radially around the housing (1), in particular around the securing flange (6) in the region of the cylindrical housing (1), so as to be opposite the centring flange (5).

7. An electric motor and/or transmission according to any one of the preceding claims, **characterised in that** the at least one strain sensor (9) is arranged substantially centrally between two adjacent corner regions (7) of two side-by-side arrangements of securing screw holes (8), so as to be below the centring flange (5) at the cylindrical housing (1) in a manner close thereto.

8. An electric motor and/or transmission according to any one of the preceding claims, **characterised in that** the securing flange (6) is formed from the housing (1) itself in an at least partially circumferential manner or is associated therewith, wherein at least one recess (18) or gap to form at least one constriction (19) is provided between the outer surface (20) and the securing flange (6).

9. An electric motor and/or transmission according to any one of the preceding claims 2 to 8, **characterised in that** the at least one strain sensor (9) is in the form of a wire strain gauge and is connected to the evaluation unit (10) and/or the display electronics (11).

10. An electric motor and/or transmission according to any one of the preceding claims 2 to 9, **characterised in that** a force and/or a torque, in particular radial forces, can be determined with the at least one strain sensor (9) and an alarm signal or a switch-off signal can be generated and displayed in the display electronics (11) when a selectable, given threshold value is exceeded.

11. An electric motor and/or transmission according to claim 10, **characterised in that** the signals, ascertained in the at least one strain sensor (9), to determine the state, in particular the operating state, of the transmission are recorded over time, stored in the evaluation unit (10) and optionally saved, displayable or retrievable in the display electronics (11).

12. An electric motor and/or transmission according to any one of the preceding claims 2 to 11, **characterised in that** the display electronics (11) is connected to at least one sensor (13), strain sensor (9), force sensor, temperature sensor, incremental sensor or the like, which are associated with the transmission or the transmission elements.

13. An electric motor and/or transmission according to any one of the preceding claims 2 to 12, **characterised in that** the at least one display electronics (11) is associated with a base flange (2) of the housing (1).

14. An electric motor and/or transmission according to any one of the preceding claims 2 to 13, **characterised in that** in the display electronics (11), in particular on the indicating display (12), transmission-specific, also permissible status parameters and threshold values, such as force, temperature, life span, number of revolutions, can be optically indicated and read off.

15. An electric motor and/or transmission according to any one of the preceding claims 2 to 14, **characterised in that** the status data generated in the display electronics (11), in particular in the indicating display (12), are additionally transmittable optionally in a wireless manner to an external evaluation device (10).

16. An electric motor and/or transmission according to any one of the preceding claims 2 to 15, **characterised in that** the transmission-specific status data, such as force, temperature, operating time, number of revolutions etc. can be retrieved and read off via the manually operable indicating display (12).

17. An electric motor and/or transmission according to any one of the preceding claims 3 to 16, **characterised in that** the damping element (14), inserted into the radially encircling groove, is in the form of a resiliently deformable rubber element.

## Revendications

1. Moteur électrique et/ou transmission avec un boîtier (1) auquel est prévue une bride de fixation (6), au boîtier (1) étant associé au moins un capteur de dilatation (9),
**caractérisé par le fait**
**que** la bride de fixation (6) est distante radialement au moins partiellement ou totalement, par l'intermédiaire d'un collet (18), par rapport à la surface d'enveloppe (20) du boîtier (1), la bride de fixation (6) présentant, à l'endroit du collet (18), au moins un rétrécissement (19), en particulier un rétrécissement au moins partiellement ou totalement radialement périphérique (19) destiné à recevoir au moins un capteur de délitation (9).

2. Moteur électrique et/ou transmission selon la revendication 1, **caractérisé par le fait qu'**au boîtier (1) est prévue une bride de centrage (5) et qu'au boîtier (1) est associée au moins une électronique d'affichage (11), en particulier un écran d'affichage (12).

3. Moteur électrique et/ou transmission selon la revendication 1 ou 2, **caractérisé par le fait que** la bride de centrage (5) présente au moins une rainure radialement périphérique (16) dans laquelle est placé au moins un élément d'amortissement (14).

4. Moteur électrique et/ou transmission selon l'une des revendications précédentes, **caractérisé par le fait que** l'au moins un capteur de dilatation (9) est disposé dans la zone cylindrique de la bride de fixation (6).

5. Moteur électrique et/ou transmission selon la revendication 4, **caractérisé par le fait que** l'au moins un capteur de dilatation (9) est disposé près des trous à vis de fixation (8) de la bride de fixation (6).

6. Moteur électrique et/ou transmission selon l'une des revendications précédentes, **caractérisé par le fait que** plusieurs capteurs de dilatation (9) sont disposés répartis radialement autour du boîtier (1), en particulier autour de la bride de fixation (6) à l'endroit du boîtier cylindrique (1), opposés à la bride de centrage (5).

7. Moteur électrique et/ou transmission selon l'une des revendications précédentes, **caractérisé par le fait que** l'au moins un capteur de dilatation (9) est disposé environ au centre entre deux zones de coin adjacentes (7) de deux aménagements adjacents de trous à vis de fixation (8) au-dessous de la bride de centrage (5) sur le boîtier cylindrique (1), près de ce dernier.

8. Moteur électrique et/ou transmission selon l'une des revendications précédentes, **caractérisé par le fait que** la bride de fixation (6) est réalisée au moins partiellement en périphérie à partir du boîtier (1) lui-même ou est associée à ce dernier, entre la surface d'enveloppe (20) et la bride de fixation (6) étant prévu au moins un collet (18) ou un interstice destiné à former au moins un rétrécissement (19).

9. Moteur électrique et/ou transmission selon l'une des revendications précédentes 2 à 8, **caractérisé par le fait que** l'au moins un capteur de dilatation (9) est réalisé sous forme de bande de mesure de dilatation et est en communication avec l'unité d'évaluation (10) et/ou l'électronique d'affichage (11).

10. Moteur électrique et/ou transmission selon l'une des revendications précédentes 2 à 9, **caractérisé par le fait que** par l'au moins un capteur de dilatation (9) peuvent être déterminés une force et/ou un couple, en particulier des forces radiales, et que lorsqu'une valeur limite sélectionnable prédéterminée est excédée, un signal d'alarme ou un signal de coupure peut être généré et représenté dans l'électronique d'affichage (11).

11. Moteur électrique et/ou transmission selon la revendication 10, **caractérisé par le fait que** les signaux déterminés dans l'au moins un capteur de dilatation (9) sont enregistrés dans le temps pour déterminer l'état, en particulier l'état de fonctionnement de la transmission, mémorisés dans l'unité d'évaluation (10) et éventuellement déposés, affichables ou rappelables dans l'électronique d'affichage (11).

12. Moteur électrique et/ou transmission selon l'une des revendications précédentes 2 à 11, **caractérisé par le fait que** l'électronique d'affichage (11) est en communication avec au moins un capteur (13), capteur de dilatation (9), capteur de force, capteur de température, capteur incrémental, ou autre associés à la transmission ou aux éléments de transmission.

13. Moteur électrique et/ou transmission selon l'une des revendications précédentes 2 à 12, **caractérisé par le fait que** l'au moins une électronique d'affichage (11) est associée à une bride de socle (2) du boîtier (1).

14. Moteur électrique et/ou transmission selon l'une des revendications précédentes 2 à 13, **caractérisé par le fait que** dans l'électronique d'affichage (11), en particulier à l'écran d'affichage (12), peuvent être affichés et lus optiquement des paramètres d'état spécifiques à la transmission, également admissibles, et des valeurs limites, telles que force, température, longévité, nombre de tours,.

15. Moteur électrique et/ou transmission selon l'une des revendications précédentes 2 à 14, **caractérisé par le fait que** les données d'état générées dans l'électronique d'affichage (11), en particulier dans l'écran d'affichage (12), peuvent en outre être transmises éventuellement sans fil à un dispositif d'évaluation externe (10).

16. Moteur électrique et/ou transmission selon l'une des revendications précédentes 2 à 15, **caractérisé par le fait que** les données d'état spécifiques à la transmission telles que force, température, durée de fonctionnement, nombre de tours, etc., peuvent être rappelées et lues par l'intermédiaire de l'écran d'affichage (12) pouvant être actionné manuellement.

17. Moteur électrique et/ou transmission selon l'une des revendications précédentes 3 à 16, **caractérisé par le fait que** l'élément d'amortissement (14) qui est placé dans la rainure radialement périphérique est réalisé sous forme d'élément en caoutchouc déformable élastiquement.
